# EUROPÄISCHE PATENTSCHRIFT

(11) **EP 3 557 657 B1**
(45) Veröffentlichungstag und Bekanntmachung des Hinweises auf die Patenterteilung: **26.07.2023**
(21) Anmeldenummer: 19170169.7
(22) Anmeldetag: 18.04.2019
(51) Int. Cl.: H01M 50/256, A45F 5/10

(54) **GRIFFSCHNUR FÜR EINEN BATTERIEKASTEN**
HANDLE CORD FOR A BATTERY BOX
CORDE À POIGNÉE POUR UN BOITIER DE BATTERIE

(30) Priorität: 19.04.2018 DE 102018109330
(43) Veröffentlichungstag der Anmeldung: 23.10.2019
(73) Patentinhaber: Clarios Germany GmbH & Co. KG, 30419 Hannover (DE)
(72) Erfinder: BRENNER, Helge, 30453 Hannover (DE); WIEGMANN, Martin, 27246 Borstel (DE); BIENECK, Uwe, 31234 Edemissen (DE)
(74) Vertreter: Meissner Bolte Partnerschaft mbB

(56) Entgegenhaltungen:
- EP-A1- 0 355 854
- DE-B1- 2 950 629
- FR-A1- 2 647 173

## Beschreibung

Die vorliegende Erfindung betrifft eine Griffschnur für einen Batteriekasten, wobei die Griffschnur eine Kordel und einen gegen zufälliges Öffnen geschützten Verschluss aufweist.

Derartige Griffschnüre sind dem Prinzip nach seit langer Zeit bekannt. Sie dienen zum Transport insbesondere von größeren Batteriekästen. Für die Griffschnur sind üblicherweise in einem Falz des Batteriekastens zwischen Deckel und Grundkörper Durchgangsöffnungen vorgesehen, durch welche die Kordel der Griffschnur gezogen wird, sodass die beiden Kordelenden an der Unterseite des Falzes miteinander durch entsprechende Verschlussteile des Verschlusses der Griffschnur verbunden werden können.

Herkömmliche Griffschnüre sind beispielsweise aus der FR 2 647 173 A1, EP 0 355 854 A1 und DE 29 50 629 B1 bekannt.

Zur sicheren Handhabung der Batterie ist es erforderlich, dass die Griffschnur so geschlossen ist, dass ein unbeabsichtigtes Lösen der Griffschnur von dem Batteriekasten ausgeschlossen ist. Das Lösen der Verbindung könnte zu einem Herunterfallen des unter Umständen sehr schweren Batteriekastens führen, wodurch Menschen und Material gefährdet würden.

In einer bekannten und serienmäßig hergestellten Ausführungsform weist die Griffschnur auf der einen Seite eine angespritzte zylindrische Verdickung auf, die als erstes Verschlussteil dient. Das andere Ende weist ein angespritztes zweites Verschlussteil auf, das wesentlich größer ausgebildet ist als das erste Verschlussteil und eine Kammer aufweist, in welche das erste Verschlussteil seitlich einführbar ist. Das mit dem ersten Verschlussteil verbundene Kordelende wird in dem zweiten Verschlussteil in einer axialen Öffnung geführt, die ebenfalls seitlich offen ist. Die Verbindung der beiden Kordelenden geschieht dadurch, dass das erste Verschlussteil in die Kammer des zweiten Verschlussteils eingeführt wird und das Kordelende in die axiale Öffnung eingedrückt wird. Das erste Verschlussteil mit der Kordel liegt dann axial in dem zweiten Verschlussteil.

Gegen ein zufälliges Lösen ist der Verschluss dadurch gesichert, dass die Kammer des zweiten Verschlussteils zumindest teilweise enger als die Breite des ersten Verschlussteils ausgeführt ist. Darüber hinaus ist der Spalt, durch den die Kordel in die axiale Öffnung gedrückt werden kann, kleiner als die Breite der Kordel.

Das erste Verschlussteil wird daher mit dem anhängenden Kordelstück in das zweite Verschlussteil eingeklemmt bzw. eingeschnappt.

Bei einer derartigen serienmäßig hergestellten Ausführungsform besteht allerdings die Gefahr, dass bei extremen Belastungen der Verschluss der Griffschnur versagen kann. Im Einzelnen ist hierbei zu berücksichtigen, dass insbesondere bei der automatischen Montage von Fahrzeugbatterien mit Robotern diese an den Griffschnüren des Batteriekastens durch die Roboterarme gegriffen und an die Einbauposition verfahren werden. Hierbei können Beschleunigungen bis 6 G auftreten. Hierbei besteht die Gefahr, dass das erste Verschlussteil aus der Kammer des zweiten Verschlussteils herausspringt, obgleich die Kammer des zweiten Verschlussteils zumindest teilweise enger als die Breite des ersten Verschlussteils ausgeführt ist. Diese Gefahr besteht insbesondere dann, wenn die Griffschnur erhöhten Temperaturen ausgesetzt ist, da bereits ab etwa 50° C das Plastikmaterial, aus welchem die herkömmlichen Verschlussteile üblicherweise gebildet sind, eine weichere Konsistenz aufweisen, die es nicht mehr erlaubt, dass das erste Verschlussteil sicher in dem zweiten Verschlussteil eingeklemmt bzw. eingeschnappt bleibt, wenn hohe Zugbelastungen auf die Griffschnur und somit auf die beiden Verschlussteile der Griffschnur in entgegengesetzte Richtungen wirken.

Auf Grundlage dieser Problemstellung liegt der Erfindung die Aufgabe zugrunde, eine Griffschnur der eingangs genannten Art dahingehend weiterzubilden, dass auch bei hohen Belastungen und insbesondere bei hohen Belastungen und gleichzeitig relativ hohen Temperaturen ein zufälliges Öffnen des Verschlusses der Griffschnur sicher verhindert werden kann.

Diese Aufgabe wird erfindungsgemäß durch den Gegenstand des unabhängigen Patentanspruchs 1 gelöst, wobei vorteilhafte Weiterbildungen der erfindungsgemäßen Griffschnur in den abhängigen Ansprüchen angegeben sind.

Demgemäß betrifft die Erfindung insbesondere eine Griffschnur für einen Batteriekasten mit einer Kordel und einem gegen zufälliges Öffnen geschützten Verschluss aus zwei an beiden Enden der Kordel angebrachten Verschlussteilen. Ein erstes Verschlussteil weist einen Körper auf mit einem gegenüber der Kordel größeren Durchmesser. Dieser Körper ist in eine Kammer im zweiten Verschlussteil einführbar, wobei hierzu das zweite Verschlussteil eine quer zu seiner Längsachse angeordnete und die Durchführung des Körpers des ersten Verschlussteils erlaubende Durchgangsöffnung aufweist. Die Durchgangsöffnung des zweiten Verschlussteils ist über eine etwa die Kordelbreite aufweisende axiale Verengung mit der Kammer des zweiten Verschlussteils verbunden, um den Körper des ersten Verschlussteils aufnehmen zu können. Dabei ist die Kammer sowie die Verengung zur Unterseite der Durchgansöffnung offen, zur Oberseite der Durchgangsöffnung und vorzugsweise auch zur Seite jedoch geschlossen.

Um auch bei extremen Zugbelastungen und/oder Temperaturbelastungen wirksam zu verhindern, dass der Körper des ersten Verschlussteils in ungewollter Weise aus der Kammer des zweiten Verschlussteils und insbesondere über die in der Kammer zur Unterseite der Durchgangsöffnung vorgesehene Öffnung herausspringen kann, ist erfindungsgemäß vorgesehen, dass das erste Verschlussteil und/oder das zweite Verschlussteil derart ausgebildet sind, ist, dass in einem Zustand, wenn der Körper des ersten Verschlussteils in der Kammer des zweiten Verschlussteils aufgenommen ist, bei Belastung der Kordel auf Zug eine auf den Körper des ersten Verschlussteils in Richtung der Oberseite der Kammer wirkende Kraftkomponente generiert wird.

Mit anderen Worten, erfindungsgemäß wird vorgeschlagen, dass mindestens eines der beiden Verschlussteile so ausgebildet ist, dass bei einer Zugbelastung automatisch der Körper des ersten Verschlussteils von der Öffnung der Kammer des zweiten Verschlussteils wegbewegt oder zumindest weggedrückt wird, um so wirksam die Gefahr eines Herausspringens der Körpers des ersten Verschlussteils aus der Kammer der zweiten Verschlussteils zu minimieren bzw. zu eliminieren, und zwar selbst dann, wenn der Verschluss der Griffschnur auch für längere Zeit einer erhöhten Temperatur ausgesetzt ist.

Zum Generieren der auf den Körper des ersten Verschlussteils in Richtung der Oberseite der Kammer wirkenden Kraftkomponente kommen verschiedene Ansätze in Frage. Erfindungsgemäß weist mindestens eine die Kammer des zweiten Verschlussteils begrenzende Wand eine Kraftumlenkschräge auf, die derart ausgebildet ist, dass bei Belastung der Kordel auf Zug eine von dem Körper des ersten Verschlussteils auf diese Wand wirkende Kraft zumindest teilweise in eine in Richtung der Oberseite der Kammer wirkende Kraftkomponente umgelenkt wird.

Hierbei würde es sich anbieten, wenn die mindestens eine die Kammer begrenzende Wand mit der Kraftumlenkschräge jene Wand ist, in welcher die axiale Verengung ausgebildet ist. Alternativ oder zusätzlich kann die mindestens eine die Kammer begrenzende Wand mit der Kraftumlenkschräge eine parallel zur Längsachse der Kammer verlaufende Wand sein.

Alternativ oder zusätzlich weist die Wand an dem freien Ende des Körpers des ersten Verschlussteils eine entsprechende Kraftumlenkschräge, insbesondere von mindestens 0,5°, vorzugsweise von mindestens 1° und noch bevorzugter von mindestens 2° gegenüber der Normalen, auf. Diese Kraftumlenkschräge sollte derart ausgebildet sein, dass bei Belastung der Kordel auf Zug eine von dem Körper des ersten Verschlussteils auf diese Wand wirkende Kraft zumindest teilweise in eine in Richtung der Oberseite der Kammer wirkende Kraftkomponente umgelenkt wird.

Die mit der Erfindung erzielbaren Vorteile liegen auf der Hand: einerseits entspricht der Aufbau der erfindungsgemäßen Griffschnur im Wesentlichen dem Aufbau der eingangs beschriebenen, serienmäßig hergestellten Ausführungsform, sodass die erfindungsgemäße Griffschnur eingesetzt werden kann, ohne hierfür den entsprechenden Batteriekasten umzugestalten.

Andererseits wird durch eine leicht umsetzbare Modifikation von mindestens einem der beiden Verschlussteile die Langzeitbeständigkeit des Verschlusses auch bei hohen Zugbelastungen und hohen Temperaturen deutlich verbessert.

Versuche haben gezeigt, dass die Verschlusssicherheit der Griffschnur bereits deutlich gesteigert werden kann, wenn die Kraftumlenkschräge mindestens 0,5° gegenüber der Normalen geneigt ist. Vorzugsweise sollte jedoch die Kraftumlenkschräge mindestens 1° und noch bevorzugter mindestens 2° gegenüber der Normalen betragen.

Insbesondere bei dieser Ausführungsform ist es von Vorteil, wenn das erste Verschlussteil und/oder das zweite Verschlussteil eine Verdrehsicherung aufweisen/aufweist zum Definieren einer vorab festgelegten Position und/oder Ausrichtung des Körpers des ersten Verschlussteils mit Bezug auf die Kammer des zweiten Verschlussteils, wenn der Körper in der Kammer aufgenommen ist. Auf diese Weise kann sichergestellt werden, dass die Kraftumlenkschräge, wenn diese an der Wand an dem freien Ende des Körpers des ersten Verschlussteils ausgebildet ist, eine wirksame Kraftumlenkung in Richtung der Oberseite der Kammer bewirkt.

Gemäß Ausführungsformen der erfindungsgemäßen Griffschnur ist an einem dem ersten Verschlussteil zugewandten Endbereich der Kordel ein insbesondere integral mit dem Körper des ersten Verschlussteils (6) ausgebildetes oder andersartig mit dem Körper des ersten Verschlussteils verbundenes hülsenförmiges Element vorgesehen, welches ausgebildet ist, klemmend in der axialen Verengung aufgenommen zu werden. Mit dieser Maßnahme kann die Langzeitbeständigkeit des Verschlusses auch bei hohen Zugbelastungen und hohen Temperaturen deutlich verbessert werden.

Gemäß Ausführungsformen ist die Kordel der erfindungsgemäßen Griffschnur aus Polypropylen gebildet, insbesondere aus einem vorzugsweise geflochtenen, wärmestabilisierten Polypropylen-Garn. Auf diese Weise weist auch die Kordel der Griffschnur eine erhöhte Temperaturbeständigkeit auf.

Die Erfindung betrifft ferner einen Bleiakkumulator mit einem Batteriekasten und zwei erfindungsgemäßen Griffschnüren, wobei der Batteriekasten an zwei sich gegenüberliegenden Seitenwänden Durchführungslöcher zur Aufnahme der Kordel einer Griffschnur aufweist, oder wobei der Batteriekasten an zwei sich gegenüberliegenden Seitenwänden jeweils einen Flanschbereich mit Durchführungslöchern zur Aufnahme der Kordel einer Griffschnur aufweist.

In diesem Zusammenhang ist es von Vorteil, wenn der Batteriekasten aus einem Polypropylen-Material gebildet ist, welches übereinstimmt mit dem Material, aus welchem die ersten und zweiten Verschlussteile der Griffschnüre gebildet sind.

Nachfolgend wird unter Bezugnahme auf die beiliegenden Zeichnungen exemplarische Ausführungsformen der erfindungsgemäßen Griffschnur näher beschrieben.

Es zeigen:
- FIG. 1: schematisch die Unterseite einer exemplarischen Ausführungsform der erfindungsgemäßen Griffschnur;
- FIG. 2.: schematisch die exemplarische Ausführungsform der erfindungsgemäßen Griffschnur gemäß FIG. 1 in einer Seitenansicht;
- FIG. 3: schematisch die Oberseite der exemplarischen Ausführungsform der erfindungsgemäßen Griffschnur gemäß FIG. 1;
- FIG. 4: schematisch eine Schnittansicht entlang der Linie A-A in FIG. 3;
- FIG. 5: schematisch eine Schnittansicht entlang der Linie B-B in FIG. 3;
- FIG. 6a: schematisch und in einer Schnittansicht den Verschluss einer ersten exemplarischen Ausführungsform der erfindungsgemäßen Griffschnur in einem Zustand, in welchem der Körper des ersten Verschlusses in der Kammer des zweiten Verschlussteils aufgenommen ist;
- FIG. 6b: schematisch und in einer Schnittansicht den Verschluss einer zweiten exemplarischen Ausführungsform der erfindungsgemäßen Griffschnur in einem Zustand, in welchem der Körper des ersten Verschlusses in der Kammer des zweiten Verschlussteils aufgenommen ist; und
- FIG. 7: schematisch und ausschnittsweise einen Bleiakkumulator mit einer Griffschnur gemäß FIG. 1 im verbundenen Zustand.

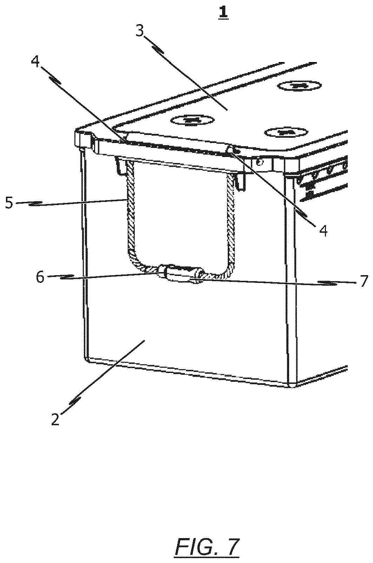

FIG. 7 zeigt bereichsweise einen Batteriekasten 1, der aus einem Grundkörper und einem Deckel besteht. Der Deckel übergreift einen Flansch des Grundkörpers. In diesem Flansch befinden sich auf beiden Seiten des Batteriekastens je zwei Durchgangslöcher, durch welche die Kordel einer Griffschnur hindurchgesteckt werden kann.

Die Kordel der Griffschnur ist an ihren beiden Enden mit zwei Verschlussteilen versehen, von denen das erste Verschlussteil in das zweite Verschlussteil einlegbar ist. Mit dem Verschluss ist die Griffschnur unterhalb des Flansches verschlossen, sodass der Batteriekasten 1 an der oberhalb des Flansches gebildeten Schlaufe getragen werden kann.

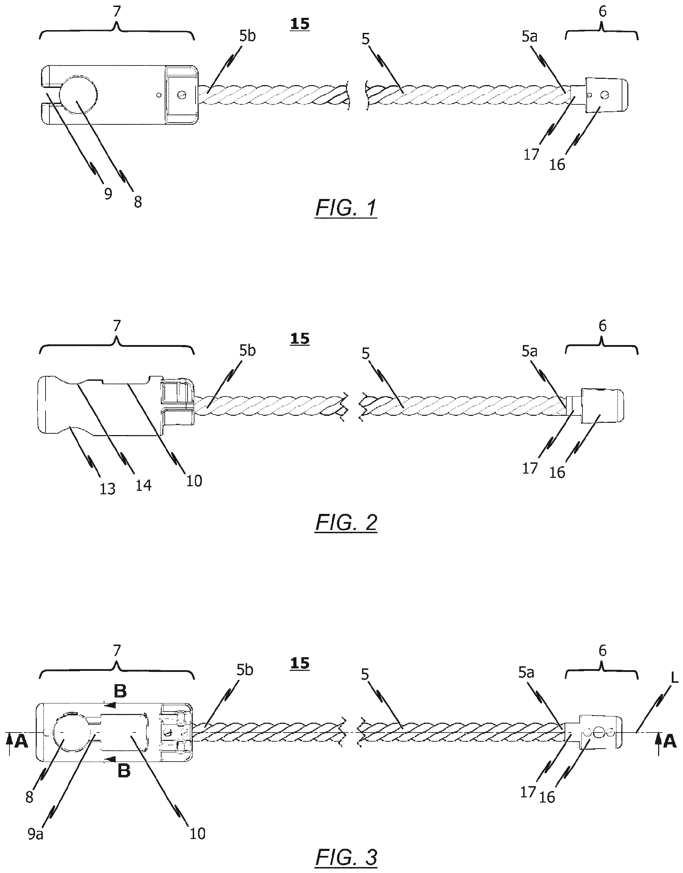

Wie FIGS. 1 bis 4 verdeutlichen, besteht das erste Verschluss lediglich aus einem zylindrischen, im Wesentlichen runden, an das Kordelende angespritzten Kunststoffkörper, dessen Durchmesser etwas größer als der Kordeldurchmesser ist.

Das zweite Verschlussteil ist mit einer senkrecht zu seiner Längsachse, und damit zur Kordelachse, angeordneten Durchgangsöffnung versehen, deren Durchmesser etwas größer als der Durchmesser des ersten Verschlussteils ist, sodass das Verschlussteil bzw. der Körper des Verschlussteils durch die Durchgangsöffnung durchführbar ist. An die Durchgangsöffnung schließt sich zum freien Ende des zweiten Verschlussteils eine zur Unterseite der Durchgangsöffnung offene, zur Oberseite jedoch geschlossene axiale Öffnung an. Diese Öffnung dient zur axialen Aufnahme des Kordelendes.

Auf der Oberseite der Durchgangsöffnung schließt sich an die Durchgangsöffnung zum kordelseitigen Ende des zweiten Verschlussteils eine Verengung in Form eines nach oben geöffneten axialen Kanals an, der in eine Kammer mündet, deren Innenabmessungen um ein weniges größer sind als die Außenabmessungen des ersten Verschlussteils. Sowohl die Kammer als auch die Verengung sind nach oben offen, zur Seite und nach unten jedoch geschlossen. Sie sind so ausgebildet, dass das erste Verschlussteil bzw. der Körper des ersten Verschlussteils und das unmittelbar daran befindliche Kordelende im geschlossenen Zustand der Verbindung axial in dem zweiten Verschlussteil liegen.

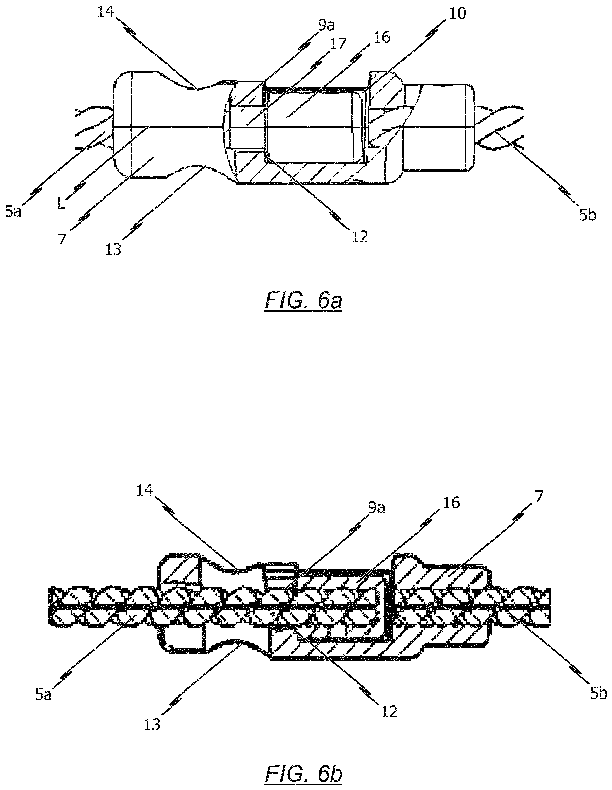

Zum Verschließen des Verschlusses wird zunächst das erste Verschlussteil bzw. der Körper des ersten Verschlussteils mit dem Kordelende durch die Durchgangsöffnung von unten hindurch gesteckt, sodass sich der Körper des ersten Verschlussteils oberhalb der Oberseite des zweiten Verschlussteils befindet. Dann wird durch Drücken auf das erste Verschlussteil von schräg oben auf das an der Unterseite des zweiten Verschlussteils befindlichen Kordelstückes von schräg unten das erste Verschlussteil in die Kammer, das unmittelbar an dem ersten Verschlussteil befindliche Kordelende in die Verengung und ein etwas entfernteres Stück des Kordelendes in die axiale Öffnung eingelegt. Das Kordelende mit dem ersten Verschlussteil befindet sich dann vollständig in axialer Lager in dem zweiten Verschlussteil. Dies verdeutlicht FIG. 6.

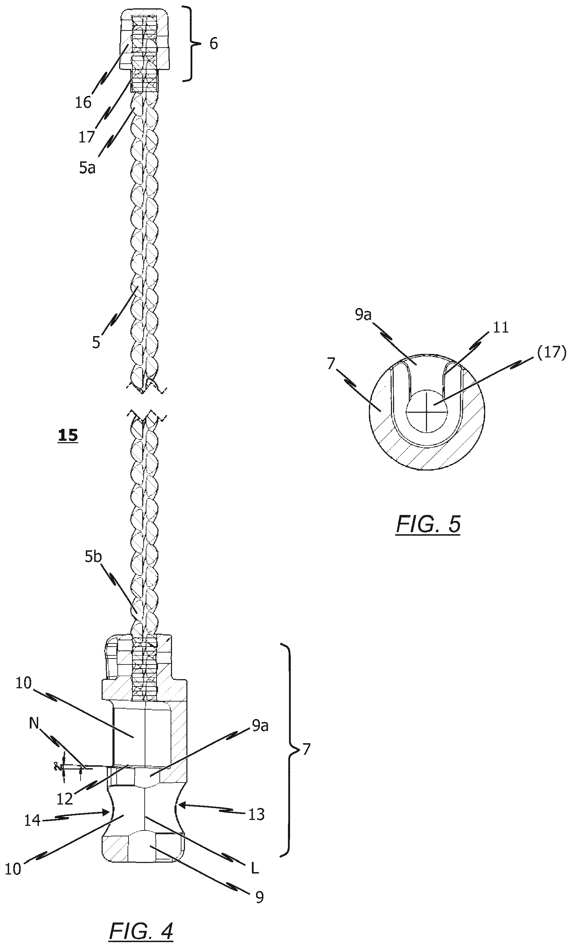

FIG. 5 zeigt einen Schnitt durch die Durchgangsöffnung, jedoch ohne eingelegtem Kordelende. Das eingelegt Kordelende ist jedoch in der Schnittdarstellung gemäß FIG. 5 angedeutet. Demnach ist die Durchgangsöffnung ausgebildet, dass das Kordelende in der axialen Öffnung liegt, die an dem Durchmesser der Kordel angepasst ist. Die an der Unterseite des zweiten Verschlussteils befindliche nutartige Öffnung verjüngt sich leicht zur axialen Öffnung hin konisch, sodass das Kordelende beim Ziehen an der Kordel unter Überwindung einer Klemmwirkung durch die Öffnung in die axiale Öffnung einrastet. In gleicher Weise kann diese Engung mi einer zur Oberseite des zweiten Verschlussteils gerichteten nutförmigen Öffnung versehen sein, die ebenfalls nach innen hin konisch zuläuft.

FIG. 6b zeigt einen Schnitt durch das zweite Verschlussteil bei eingelegtem Körper des ersten Verschlussteils. Insbesondere ist dieser Schnittansicht die Wirkung der Kraftumlenkschräge, welche bei der Wand vorgesehen ist, in welcher die axiale Verengung ausgebildet ist.

Wie in FIG. 6b mit dem Pfeil angedeutet, bewirkt die Kraftumlenkschräge, dass bei einer Zugbelastung der Körper des ersten Verschlussteils in Richtung der Oberseite der Kammer gedrückt wird. Im Einzelnen findet eine Kraftumlenkung an der Kraftumlenkschräge statt, wobei eine in Richtung der Oberseite der Kammer wirkende und an dem Körper des ersten Verschlussteils angreifende Kraftkomponente generiert wird. Bei dem in den Zeichnungen gezeigten Ausführungsbeispiel ist die Kraftumlenkschräge um etwa 2° gegenüber der normalen geneigt; Versuche haben allerdings gezeigt, dass auch bereits deutliche Vorteile erzielt werden können, wenn die Kraftumlenkschräge mindestens 0,5° und vorzugsweise mindestens 1° gegenüber der Normalen geneigt ist.

Die Erfindung ist nicht auf die in den Zeichnungen gezeigten Ausführungsformen beschränkt, sondern ergibt sich aus einer Zusammenschau sämtlicher hierin offenbarter Merkmale. Insbesondere ist es in diesem Zusammenhang selbstverständlich denkbar, dass eine andere die Kammer begrenzende Wand mit einer entsprechenden Kraftumlenkschräge versehen ist.

Alternativ oder zusätzlich hierzu ist es denkbar, wenn die Wand an dem freien Ende des Körpers des ersten Verschlussteils eine entsprechende Kraftumlenkschräge aufweist, die derart ausgebildet ist, dass bei Belastung der Kordel auf Zug eine von dem Körper des ersten Verschlussteils auf diese Wand wirkende Kraft zumindest teilweise in eine in Richtung der Oberseite der Kammer wirkende Kraftkomponente umgelenkt wird.

## Patentansprüche

1. Griffschnur (15) für einen Batteriekasten (1) mit einer Kordel (5) und einem gegen zufälliges Öffnen geschützten Verschluss aus zwei an beiden Enden der Kordel (5) angebrachten Verschlussteilen (6, 7), von denen das erste Verschlussteil (6) aus einem Körper (16) mit einem gegenüber der Kordel (5) größeren Durchmesser besteht, der in eine Kammer (10) im zweiten Verschlussteil (7) einführbar ist, wobei zum Einführen des Körpers (16) des ersten Verschlussteils (6) in die Kammer (10) des zweiten Verschlussteils (7) das zweite Verschlussteil (7) eine quer zu seiner Längsachse (L) angeordnete, die Durchführung des Körpers (16) des ersten Verschlussteils (6) erlaubende Durchgangsöffnung (8) aufweist, die über eine etwa die Kordelbreite aufweisende axiale Verengung (9a) mit der Kammer (10) zur Aufnahme des Körpers (16) des ersten Verschlussteils (6) verbunden ist, wobei sowohl die Kammer (10) als auch die Verengung (9a) zur Unterseite (14) der Durchgangsöffnung (8) offen, zur Oberseite (13) der Durchgangsöffnung (8) und vorzugsweise auch zur Seite jedoch geschlossen sind, wobei das erste Verschlussteil (6) und/oder das zweite Verschlussteil (7) derart ausgebildet sind/ist, dass in einem Zustand, wenn der Körper (16) des ersten Verschlussteils (6) in der Kammer (10) des zweiten Verschlussteils (7) aufgenommen ist, bei Belastung der Kordel (5) auf Zug eine auf den Körper (16) des ersten Verschlussteils (6) in Richtung der Oberseite (13) der Kammer (10) wirkende Kraftkomponente generiert wird,
wobei mindestens eine die Kammer (10) begrenzende Wand und/oder die Wand an dem freien Ende des Körpers (16) des ersten Verschlussteils (6) eine Kraftumlenkschräge (12) aufweist, die derart ausgebildet ist, dass bei Belastung der Kordel (5) auf Zug eine von dem Körper (16) des ersten Verschlussteils (6) auf diese Wand wirkende Kraft zumindest teilweise in eine in Richtung der Oberseite (13) der Kammer (10) wirkende Kraftkomponente umgelenkt wird.

2. Griffschnur (15) nach Anspruch 1,
wobei in der mindestens einen die Kammer (10) begrenzenden Wand die axiale Verengung (9a) ausgebildet ist, wobei die Kraftumlenkschräge (12) um mindestens 0,5°, vorzugsweise um mindestens 1° und noch bevorzugter um mindestens 2° gegenüber der Normalen (N) geneigt ist.

3. Griffschnur (15) nach Anspruch 1 oder 2,
wobei das erste Verschlussteil (6) und/oder das zweite Verschlussteil (7) eine Verdrehsicherung aufweisen/aufweist zum Definieren einer vorab festgelegten Position und/oder Ausrichtung des Körpers (16) des ersten Verschlussteils (6) mit Bezug auf die Kammer (10) des zweiten Verschlussteils (7), wenn der Körper (16) in der Kammer (10) aufgenommen ist.

4. Griffschnur (15) nach einem der Ansprüche 1 bis 3,
wobei an einem dem ersten Verschlussteil (6) zugewandten Endbereich (5a) der Kordel (5) ein insbesondere integral mit dem Körper (16) des ersten Verschlussteils (6) ausgebildetes oder andersartig mit dem Körper (16) des ersten Verschlussteils (6) verbundenes hülsenförmiges Element (17) vorgesehen ist, welches ausgebildet ist, klemmend in der axialen Verengung (9a) aufgenommen zu werden.

5. Griffschnur (15) nach einem der Ansprüche 1 bis 4,
wobei sich an die Durchgangsöffnung (8) zum freien Ende des zweiten Verschlussteils (7) hin eine axiale Öffnung (9) etwa in Kordelbreite anschließt, die zu der Kammer (10) gegenüberliegenden Seite des zweiten Verschlussteils (7) offen ist.

6. Griffschnur (15) nach Anspruch 5,
wobei die axiale Öffnung (9) an ihrem zur Seite hin offenen Teil eine Breite aufweist, die geringer als die Dicke der Kordel (5) ist.

7. Griffschnur (15) nach einem der Ansprüche 1 bis 6,
wobei der Rand der Kammer (10) zumindest teilweise insbesondere um ein geringes Maß enger ist als die größte Breite des in die Kammer (10) eingesetzten Körpers (16) des ersten Verschlussteils (6) ist.

8. Griffschnur (15) nach einem der Ansprüche 1 bis 7,
wobei die Innenabmessungen der Durchgangsöffnung (8) größer als und insbesondere nur um weniges größer als die Außenabmessungen des Körpers (16) des ersten Verschlussteils (6) sind.

9. Griffschnur (15) nach einem der Ansprüche 1 bis 8,
wobei die beiden Verschlussteile (6, 7) zumindest im Wesentlichen zylindrisch und vorzugsweise zumindest im Wesentlichen rund ausgebildet sind.

10. Griffschnur (15) nach einem der Ansprüche 1 bis 9,
wobei die Kordel (5) aus Polypropylen gebildet ist, insbesondere aus einem vorzugsweise geflochtenen, wärmestabilisierten Polypropylen-Garn.

11. Griffschnur (15) nach einem der Ansprüche 1 bis 10,
wobei die Verschlussteile (6, 7) an die Enden (5a, 5b) der Kordel (5) angespritzt sind, und/oder
wobei ferner mindestens ein Traggriffelement vorgesehen ist, welches vorzugsweise lösbar mit der Kordel (5) der Griffschnur (15) verbunden ist.

12. Bleiakkumulator mit einem Batteriekasten (1) und zwei Griffschnüre (15) nach einem der Ansprüche 1 bis 11, wobei der Batteriekasten (1) an zwei sich gegenüberliegenden Seitenwänden Durchführungslöcher zur Aufnahme der Kordel (5) einer der beiden Griffschnüre (15) aufweist, oder wobei der Batteriekasten (1) an zwei sich gegenüberliegenden Seitenwänden jeweils einen Flanschbereich mit Durchführungslöchern zur Aufnahme der Kordel (5) einer der beiden Griffschnüre (15) aufweist.

13. Bleiakkumulator nach Anspruch 12,
wobei der Batteriekasten (1) aus einem Polypropylen-Material gebildet ist, welches übereinstimmt mit dem Material, aus welchem die ersten und zweiten Verschlussteile (6, 7) der Griffschnüre (15) gebildet sind.

## Claims

1. Handle cord (15) for a battery box (1) having a cord (5) and a closure which is protected against possible opening and is composed of two closure parts (6, 7), which are attached to the two ends of the cord (5) and of which the first closure part (6) consists of a body (16) which has a diameter larger than that of the cord (5) and can be inserted into a chamber (10) in the second closure part (7), wherein, to insert the body (16) of the first closure part (6) into the chamber (10) of the second closure part (7), the second closure part (7) has a through-opening (8), which is arranged transversely in relation to the longitudinal axis (L) of said second closure part, allows the passage of the body (16) of the first closure part (6), and is connected to the chamber (10) for receiving the body (16) of the first closure part (6) via an axial constriction (9a) having approximately the width of the cord, wherein both the chamber (10) and the constriction (9a) are open towards the bottom side (14) of the through-opening (8), are closed towards the top side (13) of the through-opening (8), and are, however, preferably also closed towards the side, wherein the first closure part (6) and/or the second closure part (7) are/is designed such that, in a state when the body (16) of the first closure part (6) is received in the chamber (10) of the second closure part (7), a force component acting on the body (16) of the first closure part (6) in the direction of the top side (13) of the chamber (10) is generated when the cord (5) is subjected to tensile loading,
wherein at least one wall delimiting the chamber (10) and/or the wall at the free end of the body (16) of the first closure part (6) has a force deflection slope (12), which is designed such that a force acting on this wall by means of the body (16) of the first closure part (6) is deflected at least partially into a force component acting in the direction of the top side (13) of the chamber (10) when the cord (5) is subjected to tensile loading.

2. Handle cord (15) according to Claim 1,
wherein the axial constriction (9a) is formed in the at least one wall delimiting the chamber (10), wherein the force deflection slope (12) is inclined by at least 0.5°, preferably by at least 1° and more preferably by at least 2° in relation to the normal (N).

3. Handle cord (15) according to Claim 1 or 2,
wherein the first closure part (6) and/or the second closure part (7) have/has a rotation prevention means for defining a position and/or alignment, established in advance, of the body (16) of the first closure part (6) with respect to the chamber (10) of the second closure part (7) when the body (16) is received in the chamber (10).

4. Handle cord (15) according to one of Claims 1 to 3,
wherein a sleeve-shaped element (17), which is in particular formed integrally with the body (16) of the first closure part (6) or is connected to the body (16) of the first closure part (6) in some other way and which is designed to be received in clamping fashion in the axial constriction (9a), is provided in an end region (5a) of the cord (5) that faces towards the first closure part (6).

5. Handle cord (15) according to one of Claims 1 to 4,
wherein, towards the free end of the second closure part (7), an axial opening (9) adjoins the through-opening (8) approximately in the width of the cord, the axial opening being open towards that side of the second closure part (7) that is situated opposite the chamber (10).

6. Handle cord (15) according to Claim 5,
wherein the axial opening (9) on its part that is open towards the side has a width which is smaller than the thickness of the cord (5).

7. Handle cord (15) according to one of Claims 1 to 6,
wherein the edge of the chamber (10) is at least partially, in particular to a small extent, narrower than the greatest width of the body (16), inserted in the chamber (10), of the first closure part (6).

8. Handle cord (15) according to one of Claims 1 to 7,
wherein the internal dimensions of the through-opening (8) are greater than and in particular only slightly greater than the external dimensions of the body (16) of the first closure part (6).

9. Handle cord (15) according to one of Claims 1 to 8,
wherein the two closure parts (6, 7) have a form which is at least substantially cylindrical and preferably at least substantially round.

10. Handle cord (15) according to one of Claims 1 to 9,
wherein the cord (5) is made of polypropylene, in particular from a preferably braided, heat-stabilized polypropylene yarn.

11. Handle cord (15) according to one of Claims 1 to 10,
wherein the closure parts (6, 7) are injection moulded onto the ends (5a, 5b) of the cord (5), and/or
wherein at least one carrying handle element which is preferably detachably connected to the cord (5) of the handle cord (15) is also provided.

12. Lead storage battery having a battery box (1) and two handle cords (15) according to one of Claims 1 to 11, wherein the battery box (1) on two mutually opposite side walls has through-holes for receiving the cord (5) of one of the two handle cords (15), or wherein the battery box (1) on two mutually opposite side walls has a respective flange region with through-holes for receiving the cord (5) of one of the two handle cords (15).

13. Lead storage battery according to Claim 12,
wherein the battery box (1) is made from a polypropylene material which matches the material from which the first and second closure parts (6, 7) of the handle cords (15) are made.

## Revendications

1. Corde de poignée (15) destinée à un boîtier de batterie (1), comprenant un cordon (5) et une fermeture protégée contre toute ouverture accidentelle, composée de deux parties de fermeture (6, 7) fixées aux deux extrémités du cordon (5), dont la première partie de fermeture (6) est composée d'un corps (16) ayant un diamètre supérieur par rapport au cordon (5) et qui peut être introduit dans une chambre (10) dans la deuxième partie de fermeture (7), dans laquelle, pour l'introduction du corps (16) de la première partie de fermeture (6) dans la chambre (10) de la deuxième partie de fermeture (7), la deuxième partie de fermeture (7) présente une ouverture de passage (8) disposée transversalement à l'axe longitudinal (L) de celle-ci, permettant le passage du corps (16) de la première partie de fermeture (6), et qui est reliée par un rétrécissement axial (9a), présentant approximativement la largeur du cordon, à la chambre (10) pour recevoir le corps (16) de la première partie de fermeture (6), dans laquelle à la fois la chambre (10) et le rétrécissement sont ouverts vers la face inférieure (14) de l'ouverture de passage (8), mais fermés vers la face supérieure (13) de l'ouverture de passage (8) et de préférence aussi vers le côté, dans laquelle la première partie de fermeture (6) et/ou la deuxième partie de fermeture (7) est/sont réalisée(s) de telle sorte que dans un état où le corps (16) de la première partie de fermeture (6) est reçu dans la chambre (10) de la deuxième partie de fermeture (7), lorsque le cordon (5) subit une traction, une composante de force agissant sur le corps (16) de la première partie de fermeture (6) en direction de la face supérieure (13) de la chambre (10) est générée,
dans laquelle au moins une paroi délimitant la chambre (10) et/ou la paroi à l'extrémité libre du corps (16) de la première partie de fermeture (6) présente(nt) un biseau de renvoi de force (12) qui est réalisé de telle sorte que lorsque le cordon (5) subit une traction, une force agissant du corps (16) de la première partie de fermeture (6) sur cette paroi est renvoyée au moins en partie dans une composante de force agissant en direction de la face supérieure (13) de la chambre (10).

2. Corde de poignée (15) selon la revendication 1,
dans laquelle le rétrécissement axial (9a) est réalisé dans ladite au moins une paroi délimitant la chambre (10), dans laquelle le biseau de renvoi de force (12) est incliné d'au moins 0,5°, de préférence d'au moins 1° et de plus grande préférence encore d'au moins 2° par rapport à la normale (N).

3. Corde de poignée (15) selon la revendication 1 ou 2,
dans laquelle la première partie de fermeture (6) et/ou la deuxième partie de fermeture (7) présente(nt) un dispositif anti-rotation pour définir une position définie préalablement et/ou pour aligner le corps (16) de la première partie de fermeture (6) par rapport à la chambre (10) de la deuxième partie de fermeture (7) lorsque le corps (16) est reçu dans la chambre (10).

4. Corde de poignée (15) selon l'une quelconque des revendications 1 à 3,
dans laquelle, dans une zone d'extrémité (5a) du cordon (5), tournée vers la première partie de fermeture (6), est prévu un élément en forme de douille (17) réalisé en particulier d'un seul tenant avec le corps (16) de la première partie de fermeture (6) ou relié autrement au corps (16) de la première partie de fermeture (6), qui est réalisé pour être reçu par serrage dans le rétrécissement axial (9a).

5. Corde de poignée (15) selon l'une quelconque des revendications 1 à 4,
dans laquelle une ouverture axiale (9) approximativement de la largeur du cordon est adjacente à l'ouverture de passage vers l'extrémité libre de la deuxième partie de fermeture (7), qui est ouverte vers le côté, opposé à la chambre (10), de la deuxième partie de fermeture (7).

6. Corde de poignée (15) selon la revendication 5,
dans laquelle l'ouverture axiale (9) présente sur sa partie ouverte vers le côté une largeur qui est inférieure à l'épaisseur du cordon (5).

7. Corde de poignée (15) selon l'une quelconque des revendications 1 à 6, dans laquelle le bord de la chambre (10) est au moins partiellement plus étroit, en particulier de peu, que la plus grande largeur du corps (16), inséré dans la chambre (10), de la première partie de fermeture (6).

8. Corde de poignée (15) selon l'une quelconque des revendications 1 à 7, dans laquelle les dimensions intérieures de l'ouverture de passage (8) sont plus grandes, en particulier un peu plus grandes, que les dimensions extérieures du corps (16) de la première partie de fermeture (6).

9. Corde de poignée (15) selon l'une quelconque des revendications 1 à 8, dans laquelle les deux parties de fermeture (6, 7) sont réalisées au moins de manière au moins substantiellement cylindrique et sont de préférence réalisées de manière au moins substantiellement ronde.

10. Corde de poignée (15) selon l'une quelconque des revendications 1 à 9, dans laquelle le cordon (5) est formé en polypropylène, en particulier en fil de polypropylène stabilisé thermiquement, de préférence tressé.

11. Corde de poignée (15) selon l'une quelconque des revendications 1 à 10,
dans laquelle les parties de fermeture (6, 7) sont effilées aux extrémités (5a, 5b) du cordon (5), et/ou
dans laquelle en outre au moins un élément de poignée de transport est prévu qui est relié de préférence de manière amovible au cordon (5) de la corde de poignée (15).

12. Accumulateur au plomb comprenant un boîtier de batterie (1) et deux cordes de poignée (15) selon l'une quelconque des revendications 1 à 11, dans lequel le boîtier de batterie (1) présente sur deux parois latérales mutuellement opposées des trous de passage pour recevoir le cordon (5) d'une des deux cordes de poignée (15), ou dans lequel le boîtier de batterie (1) présente sur deux parois latérales mutuellement opposées respectivement une zone de bride munie de trous de passage pour recevoir le cordon (5) d'une des deux cordes de poignée (15).

13. Accumulateur au plomb selon la revendication 12, dans lequel le boîtier de batterie (1) est formé d'un matériau polypropylène qui concorde avec le matériau dont lequel sont formées la première et la deuxième partie de fermeture (6, 7) des cordes de poignée (15).
